# FASCICULE DE BREVET EUROPEEN

(11) **EP 3 255 972 B1**
(45) Date de publication et mention de la délivrance du brevet: **05.06.2019**
(21) Numéro de dépôt: 16707904.5
(22) Date de dépôt: 11.02.2016
(51) Int. Cl.: A01B 75/00

(54) **ENGIN AGRICOLE**
LANDWIRTSCHAFTLICHES FAHRZEUG
FARM VEHICLE

(30) Priorité: 13.02.2015 FR 1551174
(43) Date de publication de la demande: 20.12.2017
(73) Titulaire: Touti Terre, 74150 Rumilly (FR)
(72) Inventeur: LACROUTS-CAZENAVE, Ivan, 49170 Saint Georges sur Loire (FR); LACROUTS-CAZENAVE, Flore, 74150 Moye (FR)
(74) Mandataire: GIE Innovation Competence Group
(86) Numéro de dépôt international: PCT/FR2016/050316
(87) Numéro de publication internationale: WO 2016/128685

(56) Documents cités:
- FR-A1- 2 862 324
- FR-A5- 2 123 693
- US-A- 3 037 570
- US-A- 4 526 248
- US-A- 5 762 402

## Description

La présente invention se rapporte à un engin agricole pour la réalisation de travaux agricoles, tels que des travaux de maraîchage.

Dans le maraîchage, le travail du sol est encore majoritairement réalisé à l'aide d'outils manuels, la personne qui utilise ces outils étant le plus souvent dans une posture accroupie ou à genoux sur le sol. Ce travail est répétitif et fatiguant, puisqu'il faut préparer le terrain après qu'il ait été labouré, c'est-à-dire, sarcler, planter, désherber, récolter. En outre, travailler au sol implique des positions du corps qui sont pénibles car génératrices de douleurs et, à la longue, pouvant même susciter des pathologies notamment au niveau des genoux ou du dos.

On connaît du document FR2996981, un mini tracteur enjambeur permettant d'améliorer la productivité et diminuer la pénibilité du travail. Le mini tracteur comporte deux longerons latéraux réunis par un berceau en tunnel permettant au mini-tracteur d'enjamber au moins un sillon. Il comporte également un siège ergonomique disposé entre les deux longerons latéraux. Le siège ergonomique comporte deux coussins indépendants, chaque coussin étant pourvu d'un moyen de réglage de sa position suivant au moins une direction. En ajustant la position de chaque coussin, un utilisateur peut être soutenu suivant une grande variété de postures pour limiter sa fatigue au cours d'une journée de travail sur l'outil.

Cependant, ce siège ne permet pas à l'utilisateur de prendre une position confortable près du sol. En effet, l'utilisateur reste en position accroupie, ce qui sollicite de façon importante les muscles lombaires et peut provoquer des lombalgies si cette posture accroupie est conservée trop longtemps.

Un des buts de la présente invention est de proposer un engin agricole amélioré, permettant également de diminuer la pénibilité du travail au sol par la posture de travail pouvant être prise par l'agriculteur.

A cet effet, l'invention a pour objet un engin agricole roulant caractérisé en ce qu'il comporte au moins un siège transformable entre au moins une position assise et une position de travail agenouillée, ce siège comportant :
- un coussin de soutien du buste et de la tête,
- un coussin d'appui des genoux dans la position de travail agenouillée,
- un coussin central pivotant transversalement entre une position abaissée de soutien du bassin dans la position de travail agenouillée et une position relevée pour l'assise dans la position assise.
L'engin agricole peut comporter en outre une structure de support à glissière permettant au moins un mouvement de translation du siège soit dans la direction de marche de l'engin, soit dans une direction transversale à la direction de marche de l'engin, soit dans lesdites deux directions, le siège étant monté sur un socle de l'engin agricole, le socle étant monté pivotant sur la structure de support à glissière pour permettre un pivotement des trois coussins autour d'un axe de pivotement vertical de l'engin agricole.

L'utilisateur peut donc réaliser des travaux au sol en position agenouillée avec support du buste, de la tête, des hanches et des genoux, voisine d'une position allongée ventrale, avec un rayon d'actionnement des mains au sol important, ce qui offre un confort de travail supérieur aux positions accroupies ou à genoux sur le sol, tout en permettant une grande souplesse de mouvement, grâce aux trois appuis mobiles du siège. Les trois appuis localisés au niveau de la tête, du bassin et des jambes, procurent une position confortable à l'utilisateur et la mobilité des coussins permet d'adapter au mieux la position de l'utilisateur à la nature du travail à réaliser.

Selon une ou plusieurs caractéristiques de l'engin agricole, prise seule ou en combinaison,
- l'engin agricole comporte un cadre de châssis sur lequel est montée la structure de support à glissière,
- le châssis est monté mobile en translation verticale entre une position abaissée près du sol et une position surélevée. Cela permet à l'utilisateur de pouvoir travailler au plus près du sol ou en position surélevée pour atteindre plus facilement les plants pour leur soin ou la cueillette. L'utilisateur en position de travail agenouillée peut ainsi se déplacer verticalement en hauteur en déplaçant l'ensemble comprenant le siège, ce qui est plus simple, plus économique et plus modulable que s'il devait façonner le terrain pour l'adapter à l'engin, en surélevant le sol entre les passages des roues.
- le coussin central peut s'incliner d'un angle γ compris entre 50° et 90° avec l'horizontale, pour passer de la position relevée horizontale à la position abaissée de soutien du bassin. Dans la position abaissée de soutien du bassin, le coussin central cale les hanches de l'utilisateur en épousant la forme naturelle de l'articulation de la hanche, sensiblement repliée comme « à quatre pattes ». Cette position permet de protéger la colonne vertébrale de l'utilisateur, améliorant sa posture de travail.
- le socle comporte un tube de maintien du coussin central présentant une première partie verticale alignée avec l'axe de pivotement vertical et une deuxième partie inclinée portant le coussin central,
- en position abaissée de soutien du bassin, le coussin central est en appui contre la deuxième partie inclinée, ce qui permet de renforcer le soutien du bassin,
- le coussin d'appui des genoux dans la position de travail agenouillée et le coussin central sont solidaires, le coussin d'appui des genoux pivotant transversalement entre une position d'appui des genoux dans la position de travail agenouillée et une position d'appui du dos dans la position assise,
- l'angle α entre la surface d'appui du coussin d'appui des genoux et la surface d'appui du coussin central en position abaissée de soutien du bassin est compris entre 100° et 140°,
- le coussin d'appui des genoux présente un rebord arrondi et incliné formant un creux pour le soutien des genoux de l'utilisateur,
- le coussin de soutien du buste et de la tête est escamotable entre la position de travail agenouillée et la position assise,
- le coussin de soutien du buste et de la tête est fixé au socle de manière amovible,
- le coussin de soutien du buste et de la tête est monté pivotant transversalement,
- le coussin de soutien du buste et de la tête comporte une partie d'appui tête supportant le front de l'utilisateur dans la position de travail agenouillée, dans laquelle un trou traversant est ménagé pour permettre à l'utilisateur de voir le sol,
- le coussin de soutien du buste et de la tête comporte une partie d'appui tête et une partie d'appui buste, la partie d'appui buste présentant deux ailes s'étendant en V, la pointe du V étant solidaire de la partie d'appui tête, pour soutenir le thorax de l'utilisateur dans la position de travail agenouillée. La forme en V permet de ne pas compresser les poumons de l'utilisateur et ménage deux décrochés latéraux, de chaque côté du cou de l'utilisateur, permettant le libre mouvement des bras. Cette forme particulière permet le maintien du haut du buste de l'utilisateur sans rigidifier sa posture.
- le socle comporte :
   - un tube de maintien du coussin tête muni d'au moins un moyen de réglage morphologique en longueur et dont une extrémité est reliée au coussin de soutien du buste et de la tête, et
   - un tube de maintien du coussin central muni d'un moyen de réglage morphologique en hauteur et dont une extrémité est reliée au coussin central.

### DESCRIPTION SOMMAIRE DES DESSINS

D'autres avantages et caractéristiques apparaîtront à la lecture de la description d'un exemple non limitatif de réalisation de l'invention, ainsi que sur les figures annexées sur lesquelles :
- la figure 1 représente une vue schématique de côté d'un engin agricole utilisé en position de travail agenouillée,
- la figure 2 montre une vue de l'engin agricole de la figure 1 avec l'utilisateur en position assise,
- la figure 3 est une vue analogue à la figure 2 avec un autre exemple de siège en position assise,
- la figure 4 représente un exemple d'engin avec deux sièges,
- la figure 5a représente un exemple de siège avec le coussin central en position relevée à horizontale,
- la figure 5b montre le siège de la figure 5a avec le coussin central en position abaissée de soutien du bassin,
- la figure 6 montre une vue schématique de côté d'un siège en position de travail agenouillée,
- la figure 7a montre une vue de dessus de la figure 6 dans laquelle le siège à pivoté d'environ vingt degrés dans le sens antihoraire par rapport à la direction de marche de l'engin,
- la figure 7b montre une vue similaire à la figure 7a dans laquelle le siège à pivoté d'environ vingt degrés dans le sens horaire par rapport à la direction de marche de l'engin,
- la figure 7c montre une vue similaire à la figure 7a, le siège ayant été déplacé en translation dans la direction transversale à la direction de marche de l'engin, et
- la figure 7d montre une vue similaire à la figure 7a, le siège ayant été déplacé en translation dans la direction de marche de l'engin.

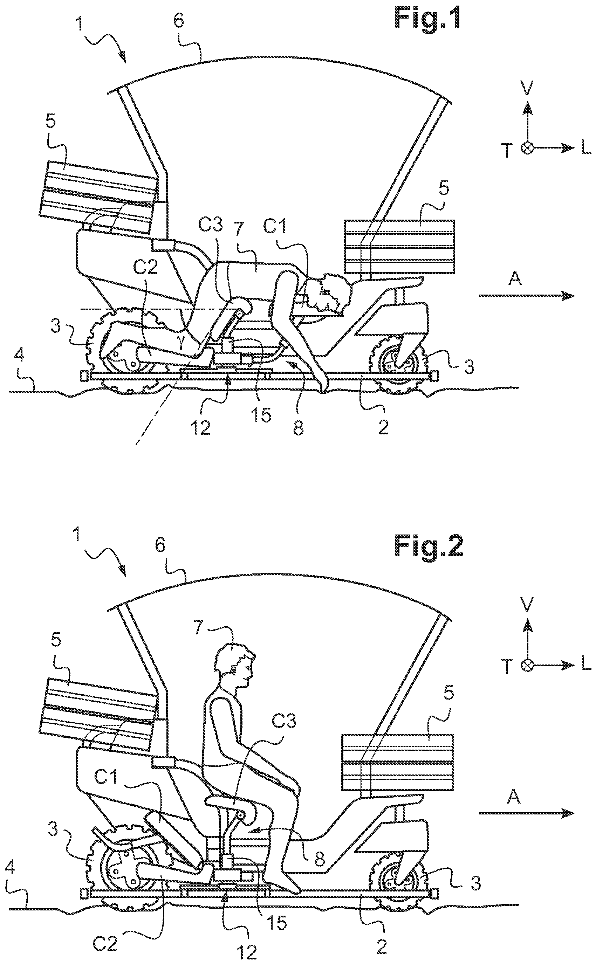

Dans la suite de la description, on adoptera à titre non limitatif des directions longitudinale, verticale et transversale indiquées sur la figure 2 par le trièdre (L, V, T) fixe par rapport à l'engin agricole 1. Le plan horizontal correspond au plan longitudinal, transversal (L, T). La direction de marche de l'engin agricole 1 est la direction longitudinale L, indiquée par la flèche A sur la figure 1. La direction transversale T est perpendiculaire à la direction longitudinale L.

### DESCRIPTION DÉTAILLÉE

Les figures 1, 2 et 3 montrent un engin agricole 1 roulant utilisé pour la réalisation de travaux agricoles, tels que des travaux de maraîchage.

L'engin 1 comporte un cadre de châssis 2 présentant une structure ouverte c'est-à-dire sans plancher, traversant au-dessus du sol 4, par exemple rectangulaire et métallique.

L'engin 1 comporte au moins 3 ou 4 roues 3, reliées au cadre de châssis 2, la(les) roue(s) 3 située(s) à l'avant étant par exemple montée(s) sur pivot pour diriger l'engin 1.

L'engin 1 peut être équipé de divers accessoires et/ou supporter une ou plusieurs cagettes 5, par exemple portées à l'avant et à l'arrière de l'engin 1, pour le stockage des produits récoltés ou de plants à planter. L'engin 1 peut également être muni d'un auvent 6, pour protéger l'utilisateur 7 du soleil ou de la pluie.

L'engin 1 peut également être motorisé. Il comporte par exemple un moteur électrique d'entraînement en rotation de roues motrices et une batterie destinée à fournir de l'énergie au moteur électrique. Le moteur électrique est déporté par exemple à l'arrière du cadre de châssis 2, de manière à conserver la structure ouverte du châssis 2.

L'engin 1 peut également comporter des panneaux solaires, par exemple disposés sur l'auvent 6 pour recharger la batterie par conversion du rayonnement solaire en énergie électrique.

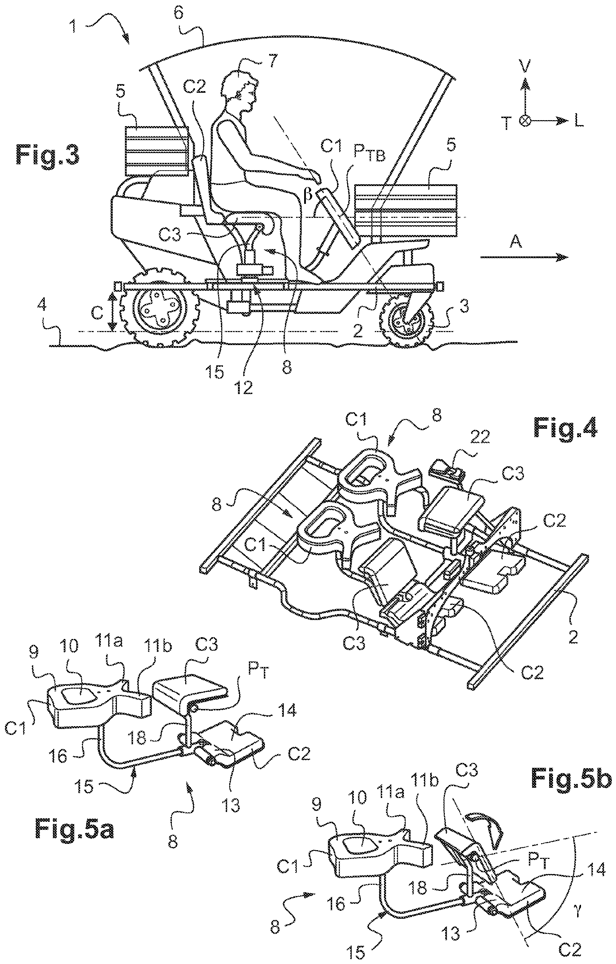

L'engin agricole 1 comporte un ou plusieurs siège(s) 8 (figure 4), monté(s) sur le cadre de châssis 2, par exemple côte à côte dans la direction transversale T, pour l'utilisation simultanée par plusieurs utilisateurs 7, chacun affecté au travail de sa propre ligne de culture au sol 4. On a ainsi représenté un exemple de disposition de deux sièges 8 sur la figure 4.

Le siège 8 est transformable entre au moins une position assise (figure 2 et 3) dans laquelle l'utilisateur 7 est assis et une position de travail agenouillée (figure 1) dans laquelle l'utilisateur 7 est quasiment couché sur le ventre avec les hanches et les genoux légèrement repliés « à quatre pattes », le buste, la tête, les hanches et les genoux, étant soutenus.

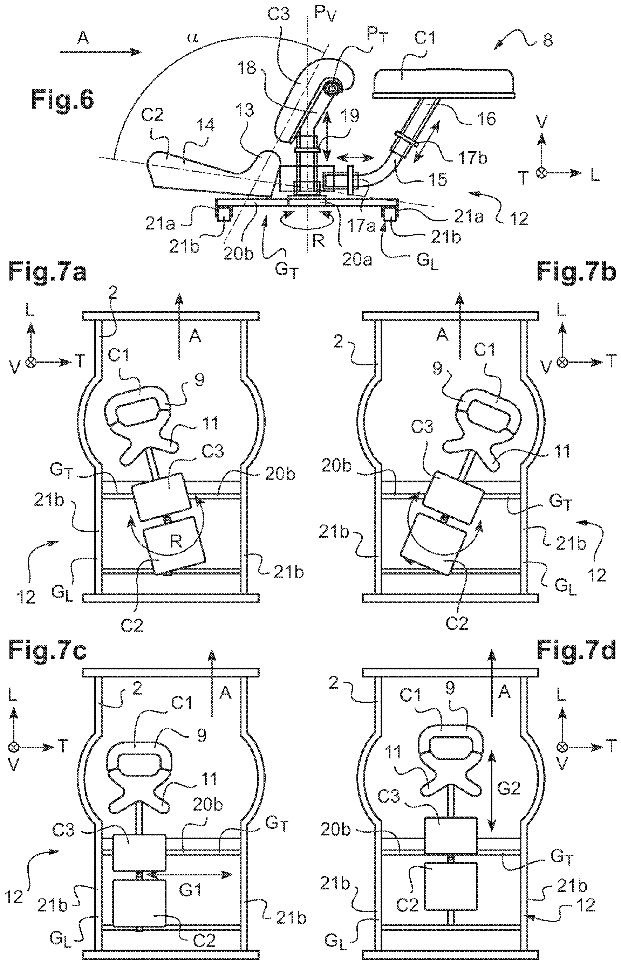

Dans la position de travail agenouillée représentée sur la figure 1, l'utilisateur 7 est sensiblement positionné au centre du cadre de châssis 2 dans la direction de marche de l'engin A. Le sol 4 est facilement accessible aux mains de l'utilisateur 7 à travers le cadre de châssis 2 (figure 7a-7d).

Cette position est particulièrement utile pour la réalisation de travaux agricoles au sol 4, tel que des travaux de désherbage, plantation, semis ou récolte car elle est moins fatigante et usante pour le dos et les genoux.

La position assise permet l'utilisation de l'engin agricole 1 pour la réalisation d'autres types de travaux agricoles ou facilite une conduite prolongée de l'engin 1.

Pour cela, le siège 8 comporte un coussin de soutien du buste et de la tête C1, un coussin d'appui des genoux C2 dans la position de travail agenouillée et un coussin central C3.

Le coussin central C3 est monté pivotant transversalement entre une position abaissée de soutien du bassin, visible sur la figure 1 et 5b et une position relevée à l'horizontale pour l'assise de l'utilisateur 7 dans la position assise (figures 2, 3 et 5a). Dans la position assise, le coussin central forme l'assise du siège. Dans la position de travail agenouillée, le coussin central est notamment situé, selon la direction longitudinale, entre le coussin d'appui des genoux C2 et le coussin de soutien du buste et de la tête C1.

Les trois coussins C1, C2, C3 du siège 8 sont montés sur un socle 15 de l'engin 1.

L'engin agricole 1 comporte en outre une structure de support à glissière 12 montée sur le cadre de châssis 2, permettant au moins un mouvement de translation du siège 8 soit dans la direction de marche de l'engin A (figure 7d), soit dans une direction transversale T à la direction de marche A (figure 7c), soit dans les deux directions A, T.

Le cadre de châssis 2 peut également être monté mobile, par exemple sur des vérins (non visibles sur les figures), en translation verticale entre une position abaissée et une position surélevée, afin de monter/descendre l'ensemble comprenant le siège 8 sur une course C par exemple comprise entre 30 et 70 centimètres, tel que de l'ordre de 50 centimètres (figure 3).

Selon un exemple de réalisation, l'engin 1 comporte des rails de guidage verticaux, par exemple agencés à l'avant et à l'arrière de l'engin 1 pour déplacer verticalement le cadre de châssis 2.

Le siège 8 peut ainsi prendre une position de travail agenouillée abaissée (figure 1), une position assise surélevée (figure 3), une position assise abaissée (figure 2) ou une position de travail agenouillée surélevée (non représentée).

Cela permet à l'utilisateur 7 de pouvoir travailler en position de travail agenouillée au plus près du sol 4 ou de travailler en position de travail agenouillée en position surélevée pour atteindre plus facilement les plants pour leur soin ou la cueillette. L'utilisateur 7 en position de travail agenouillée peut ainsi se déplacer verticalement en hauteur en déplaçant l'ensemble comprenant le siège 8, ce qui est plus simple, plus économique et plus modulable que s'il devait façonner le terrain pour l'adapter à l'engin 1, en surélevant le sol 4 entre les passages des roues 3.

Le socle 15 est monté pivotant sur la structure de support à glissière 12 pour permettre un pivotement des trois coussins C1, C2, C3 autour d'un axe de pivotement vertical Pv de l'engin agricole 1, par exemple d'environ trente degrés de part et d'autre de la direction de marche de l'engin A. Ainsi sur la figure 7a, le siège 8 a pivoté d'environ vingt degrés dans le sens antihoraire et sur la figure 7b, d'environ vingt degrés dans le sens horaire par rapport à la direction de marche de l'engin A.

Selon un exemple de réalisation mieux visible sur la figure 6, le socle 15 comporte un tube de maintien du coussin central 18 présentant une première partie verticale alignée avec l'axe de pivotement vertical Pv permettant le pivotement des trois coussins C1, C2, C3 et une deuxième partie inclinée portant le coussin central C3 à son extrémité.

Le coussin central C3 est articulé autour d'un axe de pivotement transversal P_{T} par exemple relié à une extrémité avant du coussin central C3, le long d'une bordure transversale, en contournant partiellement l'axe de pivotement transversal P_{T} (figures 5a, 5b et 6). L'axe de pivotement transversal est parallèle à la direction transversale T, de préférence parallèle au cadre du châssis 2.

En position de travail agenouillée (figure 5b et 6), le coussin central C3 est incliné en position abaissée de soutien du bassin.

Le coussin central C3 s'incline par exemple par rapport à l'horizontale d'un angle γ compris entre 50° et 90°, tel que de l'ordre 60°, pour passer de la position relevée horizontale à la position abaissée de soutien du bassin (figure 5b). Dans la position abaissée de soutien du bassin, le coussin central C3 cale les hanches de l'utilisateur 7 en épousant la forme naturelle de l'articulation de la hanche, sensiblement repliée comme « à quatre pattes ». Cette position permet de protéger la colonne vertébrale de l'utilisateur 7, améliorant sa posture de travail. Le mouvement du coussin central C3 entre la position d'assise et la position de travail agenouillée est visible en comparant les figures 5a et 5b.

Selon un exemple de réalisation, en position abaissée de soutien du bassin, le coussin central C3 vient en appui contre la deuxième partie inclinée du tube de maintien du coussin central 18, ce qui permet de renforcer le soutien du bassin. La deuxième partie inclinée du tube de maintien du coussin central 18 est alors inclinée du même angle que l'angle y d'inclinaison du coussin central C3.

Le tube de maintien du coussin central 18 peut être muni d'un moyen de réglage morphologique en hauteur 19, permettant de régler la hauteur du coussin central C3. Selon un exemple de réalisation, le tube de maintien du coussin central 18 comporte un tube manchon et un tube insérable dans le tube manchon. Le moyen de réglage morphologique en hauteur 19 est par exemple réalisé par le positionnement de goupilles au travers de trous ménagés transversalement le long des tubes manchon et insérable.

Selon un exemple de réalisation, le coussin de soutien du buste et de la tête C1 comporte une partie d'appui tête 9 supportant le front de l'utilisateur 7 dans la position de travail agenouillée. Un trou traversant 10 est ménagé dans la partie d'appui tête 9, pour permettre à l'utilisateur 7 en position agenouillée de voir le sol 4.

Le coussin de soutien du buste et de la tête C1 peut également comporter une partie d'appui buste 11. Cette partie d'appui buste 11 comporte par exemple deux ailes 11a, 11b s'étendant en V (figure 5a), la pointe du V étant solidaire de la partie d'appui tête 9 pour soutenir le thorax de l'utilisateur 7 dans la position de travail agenouillée. La partie d'appui buste 11 prolongeant la partie d'appui tête 9 peuvent être d'un seul tenant ou peuvent être en deux parties réunies par des moyens de réglage morphologiques. La forme en V permet de ne pas compresser les poumons de l'utilisateur 7 et ménage deux décrochés latéraux, de chaque côté du cou de l'utilisateur 7, permettant le libre mouvement des bras. Cette forme particulière permet le maintien du haut du buste de l'utilisateur 7 sans rigidifier sa posture.

Le socle 15 comprend un tube de maintien du coussin tête 16 s'étendant sensiblement dans la direction de marche de l'engin A et dont une extrémité porte le coussin de soutien du buste et de la tête C1. Le tube de maintien du coussin tête 16 est par exemple recourbé vers le haut. Le tube de maintien 16 peut être muni d'au moins un moyen de réglage morphologique en longueur 17a, 17b, permettant de régler la distance entre la base du tube 16 et le coussin de soutien du buste et de la tête C1. On prévoit par exemple deux moyens de réglage en longueur 17a, 17b, avant et après la zone courbée du tube de maintien du coussin tête 16.

Selon un exemple de réalisation, le tube de maintien du coussin tête 16 comporte au moins un tube manchon et un tube insérable dans le tube manchon. Le moyen de réglage morphologique en longueur 17a, 17b est par exemple réalisé par le positionnement de goupilles au travers de trous ménagés transversalement le long des tubes manchon insérable.

Le coussin d'appui des genoux C2 en position de travail agenouillée de l'utilisateur 7 peut présenter un rebord arrondi 13 et incliné formant un creux pour les genoux de l'utilisateur 7, sensiblement repliés dans la position de travail agenouillée. Le rebord arrondi 13 est agencé dans le prolongement d'une surface d'appui 14 du coussin C2 qui permet le soutien des jambes.

Selon un mode de réalisation, le coussin d'appui des genoux C2 en position de travail allongé et le coussin central C3 sont solidaires, le coussin d'appui des genoux C2 pivotant transversalement avec le coussin central C3 d'un angle α entre une position d'appui des genoux dans la position de travail agenouillée et une position d'appui du dos dans la position assise. L'engin agricole 1 est alors adapté pour une utilisation prolongée en position assise, telle que pour l'utilisation par des arboriculteurs, pépiniéristes ou vignerons.

On prévoit par exemple que l'angle α entre la surface d'appui 14 du coussin d'appui des genoux C2 et la surface d'appui du coussin central C3 en position abaissée de soutien du bassin soit compris entre 100 et 140°, tel que de l'ordre de 120°.

Le coussin de soutien du buste et de la tête C1 peut être escamotable entre la position de travail agenouillée et la position assise, de façon à libérer l'espace pour les genoux de l'utilisateur 7.

Selon un premier exemple de réalisation visible sur la figure 2, le coussin de soutien du buste et de la tête C1 est fixé au socle 15 de manière amovible. Le coussin de soutien du buste et de la tête C1 peut alors être ôté pour l'utilisation de l'engin agricole 1 en position assise. Le coussin de soutien du buste et de la tête C1 peut par exemple être ôté par le retrait de la goupille des moyens de réglage en longueur 17b, ou 17a, libérant le tube insérable portant le coussin de soutien du buste et de la tête C1.

Selon un deuxième exemple de réalisation visible sur la figure 3, le coussin de soutien du buste et de la tête C1 est monté pivotant transversalement, ce qui facilite la transformation du siège 8. Le coussin de soutien du buste et de la tête C1 est par exemple articulé autour d'un axe de pivotement transversal supplémentaire P_{Tb} par exemple le long d'une ligne médiane du coussin de soutien du buste et de la tête C1. Le coussin de soutien du buste et de la tête C1 s'incline par exemple d'un angle β compris entre 30 et 90°, tel que de l'ordre de 60°, pour passer de la position horizontale dans la position de travail agenouillée (figure 1) à la position escamotée, dans la position assise (figure 3).

Nous allons maintenant décrire en référence aux figures 7a, 7b, 7c et 7d, un exemple de réalisation de la structure de support à glissière 12.

La structure de support à glissière 12 comporte une glissière longitudinale G_{L} permettant un mouvement de translation du siège 8 dans la direction de marche de l'engin A et une glissière transversale G_{T} permettant un mouvement de translation du siège dans une direction transversale T à la direction de marche de l'engin A.

La glissière transversale G_{T} est perpendiculaire à la glissière longitudinale G_{L}.

Selon un exemple de réalisation, la glissière transversale G_{T} surmonte la glissière longitudinale G_{L} et porte le pivot du socle 15 du siège 8.

La glissière transversale G_{T} permet notamment de décaler le siège 8 sur un côté pour agencer deux ou trois sièges 8 côte à côte.

La glissière transversale G_{T} comporte par exemple une nervure coulissant dans un rail de guidage transversal ou deux tubes coulissants 20a, 20b l'un dans l'autre, s'étendant dans la direction transversale T, un des tubes 20a étant relié au pivot du socle 15 du siège 8.

La glissière longitudinale G_{L} comporte par exemple deux nervures coulissant dans un rail de guidage longitudinal respectif ou par deux ensembles de deux tubes 21a, 21b coulissants l'un dans l'autre, s'étendant dans la direction de marche de l'engin A, de chaque côté du siège 8. Pour chaque ensemble de deux tubes 21a, 21b, l'un 21b est porté par le cadre de châssis 2 et l'autre 21a peut être fixé à un même tube transversal, tel que celui 20b de la glissière transversale G_{T}.

L'engin agricole 1 peut comporter des moyens de blocage en position. Ces moyens de blocage en position peuvent permettre le blocage d'un ou des mouvements de translation et laisser libre le pivotement du siège 8 de sorte que celui-ci puisse être facilement être commandé sous l'impulsion donnée par l'utilisateur 7 en position de travail agenouillée. Par exemple, les moyens de blocage en position permettent le blocage du mouvement de translation transversal et laissent libre le pivotement du siège 8 autour de l'axe de pivotement vertical Pv ainsi que le mouvement de translation longitudinal.

Ils peuvent être réalisés par exemple au moyen de levier ou de sabots de blocage, actionnables par l'utilisateur 7 en position de travail agenouillée.

En fonctionnement, l'utilisateur 7 en position de travail agenouillée peut pivoter aisément autour de l'axe de pivotement vertical Pv (flèche R, figures 7a, 7b), se translater dans la direction transversale T à la direction de marche de l'engin A (flèche G1, figure 7c) et/ou dans la direction de marche de l'engin A (flèche G2, figure 7b).

L'utilisateur 7 peut donc réaliser des travaux au sol 4 en position agenouillée avec support du buste, de la tête, des hanches et des genoux avec un rayon d'actionnement des mains au sol 4 important, ce qui offre un confort de travail supérieur aux positions accroupies ou à genoux sur le sol 4, tout en conservant une grande souplesse de mouvement, grâce aux trois appuis mobiles du siège 8. Les trois appuis localisés au niveau de la tête, du bassin et des jambes, procurent une position confortable à l'utilisateur 7 et la mobilité des coussins C1, C2, C3 permet d'adapter au mieux la position de l'utilisateur 7 à la nature du travail à réaliser.

## Revendications

1. Engin agricole (1) roulant **caractérisé en ce qu'**il comporte au moins un siège (8) transformable entre au moins une position assise et une position de travail agenouillée, ce siège (8) comportant :
- un coussin de soutien du buste et de la tête (C1),
- un coussin d'appui des genoux (C2) dans la position de travail agenouillée,
- un coussin, dit central (C3), pivotant transversalement entre une position abaissée de soutien du bassin dans la position de travail agenouillée, et une position relevée formant une assise dans la position assise,
l'engin agricole (1) comportant en outre une structure de support à glissière (12) permettant au moins un mouvement de translation du siège (8) soit dans la direction de marche de l'engin (A), soit dans une direction transversale (T) à la direction de marche de l'engin (A), soit dans lesdites deux directions (A, T), le siège (8) étant monté sur un socle (15) de l'engin agricole (1), le socle (15) étant monté pivotant sur la structure de support à glissière (12) pour permettre un pivotement des trois coussins (C1, C2, C3) autour d'un axe de pivotement vertical (Pv) de l'engin agricole (1).

2. Engin agricole (1) selon la revendication précédente, **caractérisé en ce qu'**il comporte un cadre de châssis (2) sur lequel est montée la structure de support à glissière (12).

3. Engin agricole (1) selon la revendication précédente, **caractérisé en ce que** le cadre de châssis (2) est monté mobile en translation verticale entre une position abaissée près du sol (4) et une position surélevée.

4. Engin agricole (1) selon l'une quelconque des revendications précédentes, **caractérisé en ce que** le coussin central (C3) peut s'incliner d'un angle γ compris entre 50° et 90°, avec l'horizontale, pour passer de la position relevée horizontale à la position abaissée de soutien du bassin.

5. Engin agricole (1) selon l'une quelconque des revendications précédentes, **caractérisé en ce que** le socle (15) comporte un tube de maintien du coussin central (18) présentant une première partie verticale alignée avec l'axe de pivotement vertical (Pv) et une deuxième partie inclinée portant le coussin central (C3).

6. Engin agricole (1) selon la revendication précédente, **caractérisé en ce qu'**en position abaissée de soutien du bassin, le coussin central (C3) est en appui contre la deuxième partie inclinée.

7. Engin agricole (1) selon l'une quelconque des revendications précédentes, **caractérisé en ce que** le coussin d'appui des genoux (C2) dans la position de travail agenouillée et le coussin central (C3) sont solidaires, le coussin d'appui des genoux (C2) pivotant transversalement entre une position d'appui des genoux dans la position de travail agenouillée et une position d'appui du dos dans la position assise.

8. Engin agricole (1) selon l'une quelconque des revendications précédentes, **caractérisé en ce que** l'angle (α) entre la surface d'appui du coussin d'appui des genoux (C2) et la surface d'appui du coussin central (C3) en position abaissée de soutien du bassin est compris entre 100° et 140°.

9. Engin agricole (1) selon l'une quelconque des revendications précédentes, **caractérisé en ce que** le coussin de soutien du buste et de la tête (C1) est escamotable entre la position de travail agenouillée et la position assise.

10. Engin agricole (1) selon l'une quelconque des revendications précédentes, **caractérisé en ce que** le coussin de soutien du buste et de la tête (C1) est fixé au socle (15) de manière amovible.

11. Engin agricole (1) selon l'une quelconque des revendications précédentes, **caractérisé en ce que** le coussin de soutien du buste et de la tête (C1) est monté pivotant transversalement.

12. Engin agricole (1) selon l'une quelconque des revendications précédentes, **caractérisé en ce que** le coussin de soutien du buste et de la tête (C1) comporte une partie d'appui tête (9) et une partie d'appui buste (11), la partie d'appui buste (11) présentant deux ailes (11a, 11b) s'étendant en V, la pointe du V étant solidaire de la partie d'appui tête (9), pour soutenir le thorax de l'utilisateur (7) dans la position de travail agenouillée.

## Patentansprüche

1. Fahrbare landwirtschaftliche Maschine (1), **dadurch gekennzeichnet, dass** sie wenigstens einen Sitz (8) aufweist, der zwischen einer sitzenden Position und einer knienden Arbeitsposition umwandelbar ist, wobei dieser Sitz (8) aufweist:
- ein Kissen zur Unterstützung des Oberkörpers und des Kopfes (C1),
- ein Kissen zur Abstützung der Knie (C2) in der knienden Arbeitsposition,
- ein sogenanntes zentrales Kissen (C3), das in Querrichtung zwischen einer abgesenkten Position der Unterstützung des Beckens in der knienden Arbeitsposition und einer einen Sitz bildenden angehobenen Position in der sitzenden Position schwenkbar ist,
wobei die landwirtschaftliche Maschine (1) außerdem eine Gleitschienen-Tragkonstruktion (12) aufweist, die wenigstens eine Translationsbewegung des Sitzes (8) entweder in der Fahrtrichtung der Maschine (A) oder in einer Richtung quer (T) zur Fahrtrichtung der Maschine (A) oder in beiden besagten Richtungen (A, T) ermöglicht, wobei der Sitz (8) auf einem Sockel (15) der landwirtschaftlichen Maschine (1) angebracht ist, wobei der Sockel (15) schwenkbar auf der Gleitschienen-Tragkonstruktion (12) gelagert ist, um eine Schwenkung der drei Kissen (C1, C2, C3) um eine vertikale Schwenkachse (Pv) der landwirtschaftlichen Maschine (1) zu ermöglichen.

2. Landwirtschaftliche Maschine (1) nach dem vorhergehenden Anspruch, **dadurch gekennzeichnet, dass** sie einen Fahrgestellrahmen (2) aufweist, auf welchem die Gleitschienen-Tragkonstruktion (12) angebracht ist.

3. Landwirtschaftliche Maschine (1) nach dem vorhergehenden Anspruch, **dadurch gekennzeichnet, dass** der Fahrgestellrahmen (2) in vertikaler Translation beweglich zwischen einer abgesenkten Position nahe am Boden (4) und einer angehobenen Position ist.

4. Landwirtschaftliche Maschine (1) nach einem der vorhergehenden Ansprüche, **dadurch gekennzeichnet, dass** sich das zentrale Kissen (C3) um einen Winkel γ mit der Horizontalen, der zwischen 50° und 90° liegt, neigen kann, um von der angehobenen horizontalen Position in die abgesenkte Position der Unterstützung des Beckens überzugehen.

5. Landwirtschaftliche Maschine (1) nach einem der vorhergehenden Ansprüche, **dadurch gekennzeichnet, dass** der Sockel (15) ein Halterohr (18) des zentralen Kissens umfasst, das einen vertikalen ersten Teil, der mit der vertikalen Schwenkachse (Pv) ausgerichtet ist, und einen geneigten zweiten Teil, der das zentrale Kissen (C3) trägt, aufweist.

6. Landwirtschaftliche Maschine (1) nach dem vorhergehenden Anspruch, **dadurch gekennzeichnet, dass** in der abgesenkten Position der Unterstützung des Beckens das zentrale Kissen (C3) an dem geneigten zweiten Teil anliegt.

7. Landwirtschaftliche Maschine (1) nach einem der vorhergehenden Ansprüche, **dadurch gekennzeichnet, dass** das Kissen zur Abstützung der Knie (C2) in der knienden Arbeitsposition und das zentrale Kissen (C3) fest miteinander verbunden sind, wobei das Kissen zur Abstützung der Knie (C2) in Querrichtung zwischen einer Position der Abstützung der Knie in der knienden Arbeitsposition und einer Position der Abstützung des Rückens in der sitzenden Position schwenkbar ist.

8. Landwirtschaftliche Maschine (1) nach einem der vorhergehenden Ansprüche, **dadurch gekennzeichnet, dass** der Winkel (α) zwischen der Stützfläche des Kissens zur Abstützung der Knie (C2) und der Stützfläche des zentralen Kissens (C3) in der abgesenkten Position der Unterstützung des Beckens zwischen 100° und 140° liegt.

9. Landwirtschaftliche Maschine (1) nach einem der vorhergehenden Ansprüche, **dadurch gekennzeichnet, dass** das Kissen zur Unterstützung des Oberkörpers und des Kopfes (C1) zwischen der knienden Arbeitsposition und der sitzenden Position wegklappbar ist.

10. Landwirtschaftliche Maschine (1) nach einem der vorhergehenden Ansprüche, **dadurch gekennzeichnet, dass** das Kissen zur Unterstützung des Oberkörpers und des Kopfes (C1) lösbar am Sockel (15) befestigt ist.

11. Landwirtschaftliche Maschine (1) nach einem der vorhergehenden Ansprüche, **dadurch gekennzeichnet, dass** das Kissen zur Unterstützung des Oberkörpers und des Kopfes (C1) in Querrichtung schwenkbar gelagert ist.

12. Landwirtschaftliche Maschine (1) nach einem der vorhergehenden Ansprüche, **dadurch gekennzeichnet, dass** das Kissen zur Unterstützung des Oberkörpers und des Kopfes (C1) einen Kopf-Abstützteil (9) und einen Oberkörper-Abstützteil (11) aufweist, wobei der Oberkörper-Abstützteil (11) zwei Arme (11a, 11b) aufweist, die sich V-förmig erstrecken, wobei die Spitze des "V" mit dem Kopf-Abstützteil (9) fest verbunden ist, um den Brustkorb des Benutzers (7) in der knienden Arbeitsposition zu unterstützen.

## Claims

1. Traveling farm vehicle (1) **characterized in that** it comprises at least one seat (8) that can be converted between at least one sitting position and a kneeling work position, this seat (8) comprising:
- a cushion for supporting the chest and head (C1),
- a cushion for supporting the knees (C2) in the kneeling work position,
- a cushion, called the central cushion (C3), pivoting transversely between a lowered position for supporting the pelvis in the kneeling work position and a raised position forming a sitting part in the sitting position,
the farm vehicle (1) further comprising a supporting slideway structure (12), allowing at least one translational movement of the seat (8) either in the direction of travel of the vehicle (A) or in a direction (T) transverse to the direction of travel of the vehicle (A), or in both of said directions (A, T), the seat (8) being mounted on a base (15) of the farm vehicle (1), the base (15) being mounted pivotably on the supporting slideway structure (12) to allow the three cushions (C1, C2, C3) to pivot about a vertical pivot axis (Pv) of the farm vehicle (1).

2. Farm vehicle (1) according to the preceding claim, **characterized in that** it comprises a chassis frame (2) on which the supporting slideway structure (12) is mounted.

3. Farm vehicle (1) according to the preceding claim, **characterized in that** the chassis frame (2) is mounted to be movable in vertical translation between a lowered position close to the soil (4) and a raised position.

4. Farm vehicle (1) according to any of the preceding claims, **characterized in that** the central cushion (C3) may be inclined at an angle γ of between 50° and 90° to the horizontal, to change from the horizontal raised position to the lowered pelvic support position.

5. Farm vehicle (1) according to any of the preceding claims, **characterized in that** the base (15) comprises a tube for supporting the central cushion (18), this tube having a vertical first part aligned with the vertical pivot axis (Pv) and an inclined second part carrying the central cushion (C3).

6. Farm vehicle (1) according to the preceding claim, **characterized in that**, in the lowered pelvic support position, the central cushion (C3) bears against the inclined second part.

7. Farm vehicle (1) according to any of the preceding claims, **characterized in that** the cushion for supporting the knees (C2) in the kneeling work position and the central cushion (C3) are fixed together, the cushion for supporting the knees (C2) pivoting transversely between a position for supporting the knees in a kneeling work position and a position for supporting the back in the sitting position.

8. Farm vehicle (1) according to any of the preceding claims, **characterized in that** the angle (α) between the support surface of the knee support cushion (C2) and the support surface of the central cushion (C3) in the lowered pelvic support position is between 100° and 140°.

9. Farm vehicle (1) according to any of the preceding claims, **characterized in that** the chest and head support cushion (C1) can be turned over between the kneeling work position and the sitting position.

10. Farm vehicle (1) according to any of the preceding claims, **characterized in that** the chest and head support cushion (C1) is fastened removably to the base (15).

11. Farm vehicle (1) according to any of the preceding claims, **characterized in that** the chest and head support cushion (C1) is mounted to be transversely pivotable.

12. Farm vehicle (1) according to any of the preceding claims, **characterized in that** the chest and head support cushion (C1) comprises a head support part (9) and a chest support part (11), the chest support part (11) having two wings (11a, 11b) extending in a V shape, the point of the V being fixed to the head support part (9), to support the thorax of the user (7) in the kneeling work position.
